# EUROPÄISCHE PATENTSCHRIFT

(11) **EP 3 230 687 B1**
(45) Veröffentlichungstag und Bekanntmachung des Hinweises auf die Patenterteilung: **01.07.2020**
(21) Anmeldenummer: 15786935.5
(22) Anmeldetag: 27.10.2015
(51) Int. Cl.: G01B 13/18

(54) **PNEUMATISCHER MESSDORN UND MESSVERFAHREN**
PNEUMATIC PLUG GAUGE AND MEASURING METHOD
JAUGE-TAMPON PNEUMATIQUE ET PROCÉDÉ DE MESURE

(30) Priorität: 08.12.2014 DE 102014225169
(43) Veröffentlichungstag der Anmeldung: 18.10.2017
(73) Patentinhaber: Robert Bosch GmbH, 70442 Stuttgart (DE)
(72) Erfinder: WEICKMANN, Johannes, 91301 Forchheim (DE); SCHMIDTLEIN, Christoph, 91077 Hetzles (DE); SCHRUEFER, Andreas, 91344 Waischenfeld (DE); BECK, Herbert, 96114 Hirschaid-Sassanfahrt (DE)
(86) Internationale Anmeldenummer: PCT/EP2015/074888
(87) Internationale Veröffentlichungsnummer: WO 2016/091448

(56) Entgegenhaltungen:
- EP-A2- 2 378 240
- US-A- 3 046 778
- US-A- 5 148 693

## Beschreibung

Die vorliegende Erfindung betrifft einen Messdorn und ein Messsystem zur hochgenauen pneumatischen Winkelmessung.

### Stand der Technik

In technischen, fluiddurchstömten Systemen sind häufig Leitungen und/oder Bohrungen mit unterschiedlichen, teilweise konischen Querschnitten anzutreffen. Hierbei sind die Öffnungswinkel der konischen beziehungsweise zylindrischen Bohrungsanteile häufig funktionskritisch. Beispiele hierfür sind der Sitzwinkel an einer Common-Rail-Einspritzdüse oder an GS-Hochdruckeinspritzventilen. Weitere Beispiele sind die Zu- oder Abströmbohrungen in hydraulischen Pumpen oder Schaltventilen.

Problematisch ist hierbei insbesondere, dass Bohrungen in zunehmendem Maße nicht mehr werkzeuggebunden, d.h. mittels Bohrer, eingebracht werden. Statt dessen werden Methoden wie Laserbohren, Schleifen oder bewegtes Erodieren eingesetzt, bei denen der korrekte Öffnungswinkel nicht mehr automatisch durch die Geometrie des Werkzeugs garantiert ist. Es besteht daher ein zunehmender Bedarf, funktionskritische Öffnungswinkel hochgenau mit einer Toleranz von wenigen Zehntelgrad zu prüfen.

Hierzu werden derzeit hauptsächlich taktile Systeme, wie etwa Diatest-Doppeltaster gemäß der Druckschrift DE 39 42 207 A1, oder optische Systeme, wie beispielsweise faseroptische Interferometer gemäß der Druckschrift DE 103 02 055 A1, eingesetzt. Taktile Systeme können das zu prüfende Werkstück mechanisch beschädigen und sind vergleichsweise ungenau. Optische Systeme benötigen viel Platz und sind sehr teuer; so kostet ein Weißlichtinterferometer bis zu 200.000 €. Der gravierendste Nachteil ist aber, dass der Zeitaufwand für die Messungen zu groß ist, um in der Massenfertigung jedes einzelne Werkstück prüfen zu können. Die zur Verfügung stehende Zeit reicht nur für Stichproben.

Aus der US 5148693 ist eine Messung eines Biegewinkels eines Bleches mit einem pneumatischen Messdorn bekannt.

### Aufgabe und Lösung

Es ist daher die Aufgabe der Erfindung, hochgenaue Winkelmessungen derart zu vereinfachen und zu beschleunigen, dass sie für eine lückenlose Qualitätskontrolle in der Massenfertigung praktikabel werden.

Diese Aufgabe wird erfindungsgemäß gelöst durch einen pneumatischen Messdorn gemäß Anspruch 1 sowie durch ein Verfahren gemäß Anspruch 10. Weitere vorteilhafte Ausgestaltungen ergeben sich aus den darauf rückbezogenen abhängigen Ansprüchen.

### Offenbarung der Erfindung

Im Rahmen der Erfindung wurde ein pneumatischer Messdorn entwickelt. Dieser umfasst einen ersten Messkanal, der mit einer Druckmittelquelle verbindbar ist und in einen auf eine Oberfläche des zu prüfenden Werkstücks richtbaren ersten Auslass für das Druckmittel mündet.

Erfindungsgemäß ist dieser Messdorn zur Bestimmung des Verkippungswinkels zwischen einer Strecke auf seiner Oberfläche und einem dieser Strecke gegenüberliegenden Bereich auf der Oberfläche des Werkstücks ausgebildet, indem der erste Auslass an einem Ende der Strecke angeordnet ist und indem mindestens ein zweiter Auslass vorgesehen ist, der am anderen Ende der Strecke angeordnet ist. Dabei muss die Strecke nicht unbedingt gerade sein. Ist der Messdorn beispielsweise konisch, können die beiden Auslässe auch azimutal gegeneinander versetzt sein, so dass der kürzeste Weg zwischen ihnen, der als Strecke fungiert, gekrümmt ist.

Es wurde erkannt, dass auf diese Weise die anerkanntermaßen hohe Präzision pneumatischer Längenmessungen in besonders vorteilhafter Weise in eine hohe Präzision der Winkelmessung umgemünzt werden kann. Indem beide Auslässe gleichzeitig oder im Wechsel mit dem Druckmittel beaufschlagt werden, sind die Abstände zwischen dem ersten Auslass und dem ihm gegenüberliegenden Bereich auf der Werkstückoberfläche sowie zwischen dem zweiten Auslass und der diesem Auslass gegenüberliegenden Werkstückoberfläche bestimmbar. Jeder Auslass bildet in Kombination mit der Werkstückoberfläche eine Drosselstelle, die das freie Abströmen des Druckmittels (z.B. Luft) behindert. Dadurch baut sich im Messkanal ein Staudruck bzw. ein definierter Massenstrom, der den Druck im Messkanal ändert, auf. Der Druck im Messkanal kann als Maß für den jeweiligen Abstand zwischen dem Auslass und der Werkstückoberfläche gemessen werden.

Ein solcher Messdorn ist zur Messung unterschiedlichster Innengeometrien und Winkel zwischen 0° und 179° Öffnung einsetzbar. Er ist so kompakt zu bauen, dass er auch in Kleinstbohrungen einführbar ist. Solche Kleinstbohrungen können beispielsweise Durchmesser zwischen 15 µm und 1,5 mm aufweisen. Der Winkel kann auch auf kurzen Strecken von weniger als 1,5 mm Länge gemessen werden. Da pneumatische Längenmessungen mit Submikrometer-Genauigkeit möglich sind und sich beim Einführen des Messdorns in eine Bohrung auch Führungsspiele realisieren lassen, die kleiner als ein Mikrometer sind, kann der Verkippungswinkel mit einer Genauigkeit von weniger als einem Zehntelgrad gemessen werden.

Weiterhin bleibt bei optischen und insbesondere taktilen Messungen die im realen Betrieb erreichbare Genauigkeit häufig hinter der theoretisch maximal möglichen Genauigkeit zurück, da die Ergebnisse durch Öl und andere Verschmutzungen bzw. Produktionsrückstände drastisch verfälscht werden. Bei der erfindungsgemäßen pneumatischen Messung werden Öl und andere Verschmutzungen durch das ausströmende Druckmittel automatisch ausgeblasen, so dass diese Fehlerquellen eliminiert werden.

Werden beide Auslässe im Wechsel mit dem Druckmittel beaufschlagt, genügt ein einziger Messkanal für beide Auslässe. Vorteilhaft enthält der Messdorn jedoch einen zweiten unabhängigen Messkanal, der in den zweiten Auslass mündet. Dann können beide Auslässe gleichzeitig unabhängig voneinander mit dem Druckmittel beaufschlagt werden. Unter der Voraussetzung, dass die durch beide Auslässe erzeugten Druckmittelströmungen sich gegenseitig nicht behindern, kann also an beiden Auslässen gleichzeitig der jeweilige Abstand zur Werkstückoberfläche pneumatisch gemessen werden.

Vorteilhaft enthält der pneumatische Messdorn mindestens eine Aussparung, in die das Druckmittel durch den Zwischenraum zwischen dem Werkstück und dem Auslass eindringen und anschließend ungedrosselt abströmen kann. Die Druckmittelströmung aus dem Auslass ist dann nur durch den Abstand des Auslasses zur Werkstückoberfläche gedrosselt. Damit hängt auch die Druckänderung im Messkanal nur von diesem Abstand ab. Insbesondere gibt es einen Abstandsbereich, in dem die Druckänderung annähernd linear zum Abstand ist, was die weitere Auswertung deutlich erleichtert.

In einer besonders vorteilhaften Ausgestaltung der Erfindung führt die Strecke zwischen den beiden Auslässen über mindestens eine derartige Aussparung. Dann vermindert sich der minimale Abstand, den die beiden Auslässe zueinander haben müssen, damit die aus ihnen austretenden Druckmittelströmungen sich nicht gegenseitig behindern. Je kleiner dieser Abstand ist, desto filigranere Werkstücke können vermessen werden.

Vorteilhaft weist der Messdorn mindestens einen Anschlag zur Anlage am Werkstück auf. Dieser Anschlag kann beispielsweise drei- oder mehrflügelig sein. Der Messdorn kann dann selbstjustierend in eine definierte Position und Orientierung relativ zum Werkstück gebracht werden, so dass es ein besonders einsichtiges Bezugssystem für den Absolutwert des gemessenen Winkels gibt.

In einer besonders vorteilhaften Ausgestaltung der Erfindung ist der Messdorn zumindest in dem Bereich, in dem die Strecke zwischen den beiden Auslässen verläuft, kegelförmig ausgebildet. Er eignet sich dann in besonderem Maße zur Untersuchung kegelförmiger Bohrungen. Der Öffnungswinkel des Kegels sollte dann um nicht mehr als 1°, bevorzugt um nicht mehr als 0,5°, vom nominellen Öffnungswinkel der gefertigten und zu untersuchenden Bohrung abweichen. In diesem Arbeitsbereich ist die Differenz zwischen den an beiden Auslässen infolge der Drosselung durch das benachbarte Werkstück erzeugten Druckänderungen annähernd linear zum Verkippungswinkel.

Das erfindungsgemäße Messsystem zur Bestimmung eines Winkels an einer Oberfläche eines Werkstücks umfasst neben dem erfindungsgemäßen pneumatischen Messdorn mindestens eine Druckmittelquelle mit einem gedrosselten, zu den Auslässen führenden Ausgang sowie mindestens eine zwischen den Ausgang und die Auslässe geschaltete Druckmesseinrichtung. Sind zwei Messkanäle vorhanden, sind vorteilhaft für jeden Messkanal ein eigener gedrosselter Ausgang und eine eigene Druckmesseinrichtung vorhanden.

Wird ein Messkanal mit Druckmittel beaufschlagt und ist kein Werkstück in der Nähe des Auslasses, kann das Druckmittel frei abströmen. Hinter dem gedrosselten Ausgang fällt daher der von der Druckmesseinrichtung registrierte Druck fast auf den Umgebungsdruck ab. Ist dagegen durch das Werkstück das Abströmen des Druckmittels aus dem Auslass stark gedrosselt, steigt der registrierte Druck fast bis auf den Druck, der von der Druckmittelquelle zugeführt wurde.

In einer weiteren vorteilhaften Ausgestaltung der Erfindung sind Mittel zur wechselweisen Beaufschlagung der beiden Auslässe mit dem Druckmittel vorgesehen. Dann können die aus beiden Auslässen auftretenden Druckmittelströmungen von vornherein nicht miteinander wechselwirken. Für den Abstand zwischen den Auslässen ist damit keine untere Grenze mehr gesetzt. Es können noch filigranere Werkstücke untersucht werden.

In einer besonders vorteilhaften Ausgestaltung der Erfindung ist die Druckmesseinrichtung mit einer Auswerteeinheit verbunden, die aus den gemessenen Drücken den gesuchten Winkel zu bestimmen vermag. In dieser Auswerteeinheit kann insbesondere eine Funktionsvorschrift (Eichung oder Justage) hinterlegt sein, die gemessenen Drücken oder Druckdifferenzen einen Verkippungswinkel zuordnet. Je nach Detaillierungsgrad dieser Funktionsvorschrift kann der Messbereich des Messsystems auch auf Bereiche von Verkippungswinkeln ausgedehnt werden, in denen der Zusammenhang des Verkippungswinkels mit dem Druck oder der Druckdifferenz nicht mehr linear ist.

Allgemein bezieht sich die Erfindung auch auf ein Verfahren zur pneumatischen Bestimmung eines Verkippungswinkels zwischen einer Strecke im Raum und einem dieser Strecke gegenüberliegenden Bereich auf der Oberfläche eines zu prüfenden Werkstücks. Die Strecke muss nicht notwendigerweise gerade sein, sondern kann auch eine gekrümmte Strecke sein, die beispielsweise auf einem Kegelmantel verläuft. Bei dem Verfahren kommt ein pneumatischer Messdorn zum Einsatz, der mindestens einen Messkanal aufweist. Der Messkanal wird über einen gedrosselten Ausgang einer Druckmittelquelle mit einem Druckmittel beaufschlagt und mündet in einen Auslass, der auf die Oberfläche des Werkstücks gerichtet wird.

Erfindungsgemäß wird an beiden Punkten der Strecke jeweils der Druck zwischen dem Ausgang der Druckmittelquelle und dem Auslass des Messkanals gemessen.

Dieser Druck ist bestimmt durch einen Staudruck bzw. durch eine von einem konstanten Massenstrom im Messkanal verursachte Druckänderung. Der Staudruck bzw. die Druckänderung durch den Massenstrom rührt von der Drosselung der aus dem Auslass austretenden Druckmittelströmung durch die Nähe des Werkstücks her. Er ist ein Maß für den Abstand zwischen dem Auslass und der Werkstückoberfläche. Ist die Strecke A genau bekannt, ergibt sich aus den Messungen des Abstands zur Werkstückoberfläche an beiden Punkten der Strecke A eindeutig der gesuchte Verkippungswinkel.

Diese Messung kann besonders einfach mit einem erfindungsgemäßen Messdorn oder einem erfindungsgemäßen Messsystem durchgeführt werden. Alternativ kann aber auch ein Messdorn mit nur einem Auslass verwendet werden, wobei dieser Auslass zunächst an den ersten Punkt der Strecke und dann an den zweiten Punkt der Strecke verfahren wird. Dann kann der Messdorn noch kleiner gebaut werden und in noch filigranere Werkstückgeometrien eingeführt werden. Dies wird damit erkauft, dass das Verfahren zu beiden Punkten der Strecke hochpräzise erfolgen muss. Entsprechende Positioniersysteme sind jedoch am Markt verfügbar.

Vorteilhaft wird die Strecke im Raum bis auf einen Winkel von höchstens 1°, bevorzugt bis auf einen Winkel von höchstens 0,5°, parallel zur Oberfläche des Werkstücks ausgerichtet. Ist beispielsweise ein Werkstück mit einer kegelförmigen Bohrung zu prüfen, kann aus einem Werkzeugsatz kegelförmiger Messdorne derjenige ausgewählt werden, dessen Öffnungswinkel im nominellen Öffnungswinkel der zu prüfenden Bohrung am nächsten kommt. Hauptanwendungsgebiet der Erfindung sind Reihenuntersuchungen nominell identischer Werkstücke in der Massenfertigung. Hier wird nur vergleichsweise selten ein Werkzeugwechsel zu einem anderen Messdorn erforderlich sein.

Die passende Ausrichtung der Strecke bewirkt, dass die Differenz zwischen den an beiden Punkten der Strecke gemessenen Drücken näherungsweise linear zum gesuchten Verkippungswinkel ist.

Vorteilhaft wird der Messkanal mit einem Druck zwischen 2 und 4 bar beaufschlagt. Der gebräuchlichste Druck für pneumatische Längenmessungen liegt um die 3 bar. Der Auslass wird an beiden Punkten der Strecke in einem Abstand zwischen 10 µm und 40 µm, bevorzugt zwischen 20 µm und 30 µm, zur Oberfläche des Werkstücks geführt. In diesem Arbeitsbereich ist die Linearität der im Messkanal erzeugten Druckänderung zum Abstand zwischen Auslass und Werkstück am besten ausgeprägt. Damit ist eine hochgenaue Winkelmessung möglich, wobei eine Funktionsvorschrift (Eichung oder Justage), die von der Druckänderung auf den Verkippungswinkel führt, mit besonders geringem Aufwand erhältlich ist.

Vorteilhaft wird nach Beaufschlagung des Messkanals mit dem Druckmittel der Druck erst gemessen beziehungsweise der weiteren Auswertung zugeführt, wenn er sich auf einen stationären Zustand eingeschwungen hat. Dies dauert typischerweise weniger als 10 Sekunden.

Die Erfindung ist nicht auf zwei Messkanäle und Auslässe eingeschränkt. Soweit es der Einbauraum zulässt, können auch mehr Messkanäle und Auslässe verwendet werden. Dadurch erhöht sich die Anzahl der Stützstellen für die Winkelmessung, und es wird außerdem eine Konturmessung der Werkstückoberfläche ermöglicht. Analog können bei Verwendung nur eines Auslasses entlang der Strecke im Raum auch mehr als nur zwei Punkte angefahren werden.

Erfindungsgemäß ist der Messdorn rotationssymmetrisch, beispielsweise kegelförmig, so dass er rotiert werden kann und der Verkippungswinkel der Werkstückoberfläche in Abhängigkeit des Drehwinkels messbar ist. Bei dieser Drehung kann der Messdorn beispielsweise auf seinem Anschlag abgestützt sein. Solche winkelabhängigen Messungen sind besonders wertvoll für die Untersuchung von Bohrungen, die mit erodierenden Fertigungsverfahren hergestellt wurden. Anstelle einer Rotation des Messdorns können entlang eines Außenumfangs des Messdorns weitere Auslässe vorgesehen sein.

Weitere, die Erfindung verbessernde Maßnahmen werden nachstehend gemeinsam mit der Beschreibung des bevorzugten Ausführungsbeispiels der Erfindung anhand einer Figur dargestellt:

### Ausführungsbeispiel

Es zeigt:

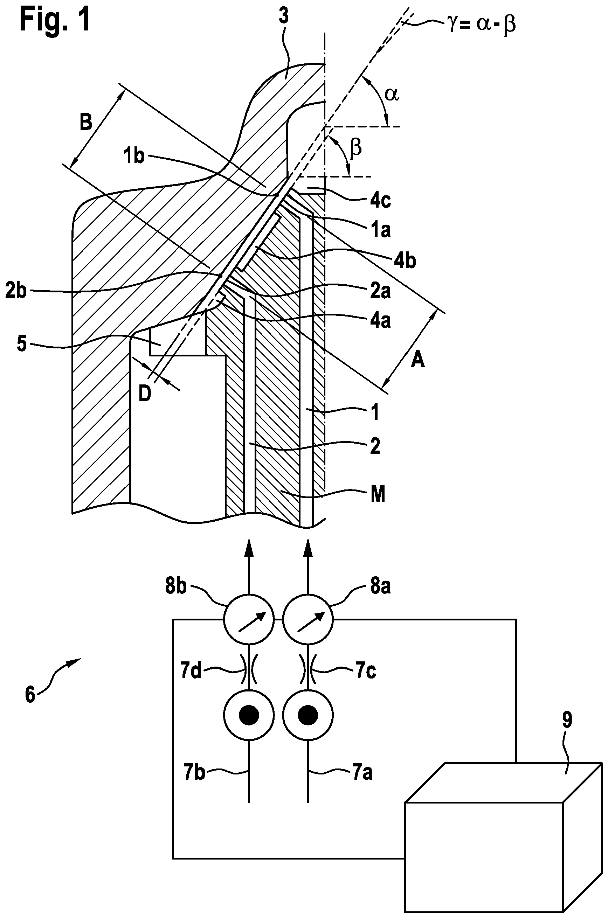

Figur 1: Ausführungsbeispiel des erfindungsgemäßen Messsystems.

Nach Figur 1 ist ein Messdorn M das zentrale Element in dem erfindungsgemäßen Messsystem 6. Der Messdorn hat zwei Messkanäle 1 und 2, die in Auslässe 1a und 2a münden. Die Auslässe 1a und 2a grenzen an Aussparungen 4a, 4b und 4c an, die als umlaufende Nuten in der Oberfläche des Messdorns ausgebildet sind. Die Strecke A zwischen den beiden Auslässen 1a und 2a führt dabei über die Aussparung 4b.

Im Betrieb des Messsystems ist der Messdorn M mit seinem dreiflügeligen Anschlag 5 am Werkstück 3 abgestützt. Dann liegt der Auslass 1a einem Bereich 1b auf der Werkstückoberfläche gegenüber. Analog liegt der Auslass 2a einem Bereich 2b auf der Werkstückoberfläche gegenüber. Insgesamt liegt also der Strecke A zwischen beiden Auslässen der Bereich B auf der Werkstückoberfläche gegenüber. Der kürzeste Abstand zwischen den Auslässen 1a und 2a einerseits und der Werkstückoberfläche 3 andererseits ist mit dem Buchstaben D gekennzeichnet.

Der Messkanal 1 wird über eine Druckmittelquelle 7a mit einem gedrosselten Ausgang 7c mit Druckluft beaufschlagt. Druckluft als Druckmittel hat den Vorteil, dass sie nach Gebrauch weder entsorgt noch in ein Reservoir zurückgeführt werden muss. Zwischen dem gedrosselten Ausgang 7c und dem Auslass 1a ist ein Druckmessgerät 8a angeordnet. Analog wird der zweite Messkanal 2 von einer Druckmittelquelle 7b mit einem gedrosselten Ausgang 7d mit Druck versorgt. Der Druck zwischen dem Ausgang 7d und dem Auslass 2a wird mit einem zweiten Druckmessgerät 8b gemessen. Die von beiden Messgeräten 8a und 8b gemessenen Drücke werden einer Auswerteeinheit 9 zugeführt, die aus der Differenz der beiden Drücke den Verkippungswinkel zwischen der Strecke A und dem Bereich B auf der Werkstückoberfläche bestimmt.

Das untersuchte Werkstück 3 hat eine kegelförmige Bohrung mit Öffnungswinkel a. Der Messdorn M ist an seinem Ende ebenfalls kegelförmig mit einem Öffnungswinkel β, der dem bei der Fertigung des Werkstücks 3 vorgegebenen Soll-Wert für den Winkel α entspricht. Der gemessene Verkippungswinkel γ entspricht der Differenz α - β zwischen dem tatsächlichen Wert des Winkels α und seinem Soll-Wert β. Er ist in Figur 1 stark übertrieben eingezeichnet.

## Patentansprüche

1. Pneumatischer Messdorn (M), umfassend einen ersten Messkanal (1), der mit einer Druckmittelquelle (7a, 7b) verbindbar ist und in einen auf eine Oberfläche eines zu prüfenden Werkstücks (3) richtbaren ersten Auslass (1a) für das Druckmittel mündet, wobei der Messdorn (M) zur Bestimmung des Verkippungswinkels (α-β) zwischen einer Strecke (A) auf seiner Oberfläche und einem dieser Strecke (A) gegenüberliegenden Bereich (1b, 2b, B) auf der Oberfläche des Werkstücks (3) ausgebildet ist, indem der erste Auslass (1a) an einem Ende der Strecke angeordnet ist (A) und indem der erste Auslass (1a) an das andere Ende der Strecke (A) verfahrbar ist oder mindestens ein zweiter Auslass (2a) vorgesehen ist, der am anderen Ende der Strecke (A) angeordnet ist, **dadurch gekennzeichnet, dass** der Messdorn rotationssymmetrisch ausgebildet ist.

2. Pneumatischer Messdorn (M) nach Anspruch 1, **dadurch gekennzeichnet, dass** ein zweiter unabhängiger Messkanal (2) vorgesehen ist, der in den zweiten Auslass (2a) mündet.

3. Pneumatischer Messdorn nach einem der Ansprüche 1 bis 2, **dadurch gekennzeichnet, dass** er mindestens eine Aussparung (4a, 4b, 4c) enthält, in die das Druckmittel durch den Zwischenraum (D) zwischen dem Werkstück (3) und dem Auslass (1a, 2a) eindringen und anschließend ungedrosselt abströmen kann.

4. Pneumatischer Messdorn (M) nach Anspruch 3, **dadurch gekennzeichnet, dass** die Strecke (A) zwischen den beiden Auslässen (1a, 2a) über mindestens eine Aussparung (4b) führt.

5. Pneumatischer Messdorn (M) nach einem der Ansprüche 1 bis 4, **dadurch gekennzeichnet, dass** er mindestens einen Anschlag (5) zur Anlage am Werkstück (3) aufweist.

6. Pneumatischer Messdorn (M) nach einem der Ansprüche 1 bis 5, **dadurch gekennzeichnet, dass** er zumindest in dem Bereich, in dem die Strecke (A) zwischen den beiden Auslässen (1a) und (2a) verläuft, kegelförmig ausgebildet ist.

7. Messsystem (6) zur Bestimmung eines Winkels (α-β) an einer Oberfläche eines Werkstücks (3), **umfassend** einen pneumatischen Messdorn (M) nach einem der Ansprüche 1 bis 6, mindestens eine Druckmittelquelle (7a, 7b) mit einem gedrosselten, zu den Auslässen führenden Ausgang (7c, 7d) sowie mindestens eine zwischen den Ausgang und die Auslässe geschaltete Druckmesseinrichtung (8a, 8b).

8. Messsystem (6) nach Anspruch 7, **dadurch gekennzeichnet, dass** Mittel zur wechselweisen Beaufschlagung der beiden Auslässe (1a, 2a) mit dem Druckmittel vorgesehen sind.

9. Messsystem (6) nach einem der Ansprüche 7 bis 8, **dadurch gekennzeichnet, dass** die Druckmesseinrichtung (8a, 8b) mit einer Auswerteeinheit (9) verbunden ist, die aus den gemessenen Drücken den Winkel (α-β) zu bestimmen vermag.

10. Verfahren zur pneumatischen Bestimmung eines Verkippungswinkels (a-β) zwischen einer Strecke (A) im Raum und einem dieser Strecke (A) gegenüberliegenden Bereich (1b, 2b, B) auf der Oberfläche eines zu prüfenden Werkstücks (3) mit einem pneumatischen rotationssymmetrischen Messdorn (M), wobei dieser Messdorn (M) mindestens einen Messkanal (1, 2) aufweist, der über einen gedrosselten Ausgang (7c, 7d) einer Druckmittelquelle (7a, 7b) mit einem Druckmittel beaufschlagt wird und in einen Auslass (1a, 2a) mündet, der auf die Oberfläche des Werkstücks (3) gerichtet wird, wobei an den beiden Endpunkten der Strecke (A) jeweils der Druck zwischen dem jeweiligen Ausgang (7c, 7d) der Druckmittelquelle (7a, 7b) und dem jeweiligen Auslass (1a, 2a) des Messkanals (1, 2) gemessen wird.

11. Verfahren nach Anspruch 10, **dadurch gekennzeichnet, dass** zur Durchführung ein Messdorn (M) oder ein Messsystem (6) nach einem der Ansprüche 1 bis 9 gewählt wird.

12. Verfahren nach einem der Ansprüche 10 bis 11, **dadurch gekennzeichnet, dass** die Strecke (A) im Raum bis auf einen Winkel von höchstens 1 Grad parallel zur Oberfläche des Werkstücks (3) ausgerichtet wird.

13. Verfahren nach einem der Ansprüche 10 bis 12, **dadurch gekennzeichnet, dass** der Messkanal (1, 2) mit einem Druck zwischen 2 und 4 bar beaufschlagt und der Auslass (1a, 2a) an beiden Punkten der Strecke (A) in einen Abstand zwischen 10 µm und 40 µm, bevorzugt zwischen 20 µm und 30 µm, zur Oberfläche des Werkstücks (3) geführt wird.

## Claims

1. Pneumatic plug gauge (M), comprising a first measuring channel (1) which can be connected to a pressure medium source (7a, 7b) and opens into a first output (1a) for the pressure medium, which outlet can be directed onto a surface of a workpiece (3) to be tested, wherein the plug gauge (M) is designed to determine the tilt angle (α-β) between a section (A) on its surface and a region (1b, 2b, B) opposite this section (A), on the surface of the workpiece (3) by the first outlet (1a) being arranged at one end of the section (A) and by the first outlet (1a) being movable to the other end of the section (A), or by at least one second outlet (2a) being provided which is arranged at the other end of the section (A), **characterized in that** the plug gauge is of rotationally symmetrical design.

2. Pneumatic plug gauge (M) according to Claim 1, **characterized in that** a second independent measuring channel (2) is provided which opens into the second outlet (2a).

3. Pneumatic plug gauge according to either of Claims 1 and 2, **characterized in that** it comprises at least one opening (4a, 4b, 4c) into which the pressure medium can penetrate through the interspace (D) between the workpiece (3) and the outlet (1a, 2a) and then flow out unchoked.

4. Pneumatic plug gauge (M) according to Claim 3, **characterized in that** the section (A) between the two outlets (1a, 2a) leads over at least one opening (4b) .

5. Pneumatic plug gauge (M) according to one of Claims 1 to 4, **characterized in that** it has at least one stop (5) for making contact with the workpiece (3).

6. Pneumatic plug gauge (M) according to one of Claims 1 to 5, **characterized in that** it is conical in form at least in the region in which the section (A) extends between the two outlets (1a) and (2a).

7. Measuring system (6) for determining an angle (α-β) on a surface of a workpiece (3), **comprising** a pneumatic plug gauge (M) according to one of Claims 1 to 6, at least one pressure medium source (7a, 7b) having a choked output (7c, 7d) leading to the outlets, and at least one pressure-measuring device (8a, 8b) connected between the output and the outlets.

8. Measuring system (6) according to Claim 7, **characterized in that** means for alternately applying pressure medium to the two outlets (1a, 2a) are provided.

9. Measuring system (6) according to either of Claims 7 and 8, **characterized in that** the pressure-measuring device (8a, 8b) is connected to an evaluating unit (9) which can determine the angle (α-β) from the measured pressures.

10. Method for pneumatically determining a tilt angle (α-β) between a section (A) in space and a region (1b, 2b, B), opposite this section (A), on the surface of a workpiece (3) to be tested with a pneumatic rotationally symmetrical plug gauge (M), wherein this plug gauge (M) has at least one measuring channel (1, 2) to which a pressure medium is applied via a choked output (7c, 7d) of a pressure medium source (7a, 7b) and which opens into an outlet (1a, 2a) which is directed onto the surface of the workpiece (3), wherein the pressure between the respective output (7c, 7d) of the pressure medium source (7a, 7b) and the respective outlet (1a, 2a) of the measuring channel (1, 2) is measured at each of the two end points of the section (A).

11. Method according to Claim 10, **characterized in that** a plug gauge (M) or a measuring system (6) according to one of Claims 1 to 9 is selected to carry out the method.

12. Method according to either of Claims 10 and 11, **characterized in that** the section (A) is oriented in space parallel to the surface of the workpiece (3) to within an angle of at most one degree.

13. Method according to one of Claims 10 to 12, **characterized in that** a pressure between 2 and 4 bar is applied to the measuring channel (1, 2), and the outlet (1a, 2a) is guided at both points of the section (A) at a distance between 10 µm and 40 µm, preferably between 20 µm and 30 µm, to the surface of the workpiece (3).

## Revendications

1. Jauge de contrainte pneumatique (M), comprenant un premier canal de mesure (1), qui peut être connecté à une source de fluide sous pression (7a, 7b) et qui débouche dans une première évacuation (1a) pour le fluide sous pression, pouvant être orientée vers la surface d'une pièce à contrôler (3), la jauge de contrainte (M) étant réalisée pour déterminer l'angle de basculement (α-β) entre une section (A) sur sa surface et une région (1b, 2b, B) opposée à cette section (A), sur la surface de la pièce (3), par le fait que la première évacuation (1a) est disposée au niveau d'une extrémité de la section (A) et par le fait que la première évacuation (1a) peut être déplacée à l'autre extrémité de la section (A) ou qu'au moins une deuxième évacuation (2a) est prévue, laquelle est disposée au niveau de l'autre extrémité de la section (A), **caractérisée en ce que** la jauge de contrainte est réalisée avec une symétrie de révolution.

2. Jauge de contrainte pneumatique (M) selon la revendication 1, **caractérisée en ce qu'**un deuxième canal de mesure indépendant (2) est prévu, lequel débouche dans la deuxième évacuation (2a).

3. Jauge de contrainte pneumatique selon l'une quelconque des revendications 1 et 2, **caractérisée en ce qu'**elle contient au moins un évidement (4a, 4b, 4c) dans lequel le fluide sous pression peut pénétrer à travers l'espace intermédiaire (D) entre la pièce (3) et l'évacuation (1a, 2a) et peut ensuite s'écouler sous forme non étranglée.

4. Jauge de contrainte pneumatique (M) selon la revendication 3, **caractérisée en ce que** la section (A) conduit entre les deux évacuations (1a, 2a) par le biais d'au moins un évidement (4b).

5. Jauge de contrainte pneumatique (M) selon l'une quelconque des revendications 1 à 4, **caractérisée en ce qu***'elle* présente au moins une butée (5) pour l'application contre la pièce (3).

6. Jauge de contrainte pneumatique (M) selon l'une quelconque des revendications 1 à 5, **caractérisée en ce qu**'elle est réalisée en forme de cône au moins dans la région dans laquelle la section (A) s'étend entre les deux évacuations (1a) et (2a).

7. Système de mesure (6) pour déterminer un angle (a-β) au niveau d'une surface d'une pièce (3), **comprenant** une jauge de contrainte pneumatique (M) selon l'une quelconque des revendications 1 à 6, au moins une source de fluide sous pression (7a, 7b) avec une sortie étranglée (7c, 7d), conduisant aux évacuations, ainsi qu'au moins un dispositif de mesure de pression (8a, 8b) monté entre la sortie et les évacuations.

8. Système de mesure (6) selon la revendication 7, **caractérisé en ce que** des moyens sont prévus pour solliciter de manière alternée les deux évacuations (1a, 2a) avec le fluide sous pression.

9. Système de mesure (6) selon l'une quelconque des revendications 7 et 8, **caractérisé en ce que** le dispositif de mesure de pression (8a, 8b) est connecté à une unité d'analyse (9) qui permet de déterminer l'angle (α-β) à partir des pressions mesurées.

10. Procédé pour déterminer, de manière pneumatique, un angle de basculement (α-β) entre une section (A) dans l'espace et une région (1b, 2b, B) opposée à cette section (A) sur la surface d'une pièce à contrôler (3) avec une jauge de contrainte pneumatique (M) à symétrie de révolution, cette jauge de contrainte (M) présentant au moins un canal de mesure (1, 2) qui est sollicité avec un fluide sous pression par le biais d'une sortie étranglée (7c, 7d) d'une source de fluide sous pression (7a, 7b) et qui débouche dans une évacuation (1a, 2a) qui est orientée vers la surface de la pièce (3), la pression entre la sortie respective (7c, 7d) de la source de fluide sous pression (7a, 7b) et l'évacuation respective (1a, 2a) du canal de mesure (1, 2) étant mesurée au niveau des deux points d'extrémité de la section (A).

11. Procédé selon la revendication 10, **caractérisé en ce qu**'une jauge de contrainte (M) ou un système de mesure (6) selon l'une quelconque des revendications 1 à 9 est sélectionné (e) pour sa mise en œuvre.

12. Procédé selon l'une quelconque des revendications 10 et 11, **caractérisé en ce que** la section (A) est orientée dans l'espace jusqu'à un angle de 1 degré au maximum parallèlement à la surface de la pièce (3) .

13. Procédé selon l'une quelconque des revendications 10 à 12, **caractérisé en ce que** le canal de mesure (1, 2) est sollicité avec une pression comprise entre 2 et 4 bar et l'évacuation (1a, 2a) au niveau de deux points de la section (A) est guidée à une distance comprise entre 10 µm et 40 µm, de préférence entre 20 µm et 30 µm, par rapport à la surface de la pièce (3).
